# EUROPEAN PATENT SPECIFICATION

(11) **EP 2 505 440 B1**
(45) Date of publication and mention of the grant of the patent: **23.12.2020**
(21) Application number: 12160934.1
(22) Date of filing: 23.03.2012
(51) Int. Cl.: B60S 1/38, B60S 1/40

(54) **Wiper blade and wiper assembly for the cleaning of vehicle windows**
Wischerblatt und Wischeranordnung zur Reinigung von Fahrzeugfenstern
Balai d'essuie-glace et ensemble essuie-glace pour le nettoyage de vitres de véhicules

(30) Priority: 31.03.2011 DE 102011001689
(43) Date of publication of application: 03.10.2012
(73) Proprietor: Valeo Systèmes d'Essuyage, 78322 Le Mesnil Saint Denis (FR)
(72) Inventor: Egner-Walter, Bruno, 74076 Heilbronn (DE); Schaeuble, Michael, 71665 VAIHINGEN/ENZ (DE)
(74) Representative: Tran, Chi-Hai

(56) References cited:
- WO-A1-2010/006776
- WO-A1-2012/065700
- DE-A1- 10 320 930
- DE-A1-102008 021 457

## Description

### Prior Art

The invention relates to a wiper blade for the cleaning of vehicle windows Furthermore, the invention relates to a an assembly comprising a wiper arm and a wiper blade for the cleaning of vehicle windows.

A wiper blade of this type is already known from DE 10 2008 021 457 A1 from the applicant. In the known wiper blade, it is provided that it has at least one nozzle opening, via which cleaning or washing fluid can be applied to the vehicle window immediately in front of the wiper blade. To this end, a vehicle-side supply system for the cleaning or washing fluid is provided, which supply system comprises a hose line which is guided in the wiper arm as far as the wiper arm adapter. The wiper blade in turn has a wiper blade adapter for the releasable connection of the wiper blade to the wiper arm, which wiper blade adapter, in addition to the mechanical connection, also serves for the fluid connection to the wiper arm. It has already been disclosed in the known document to produce or release the fluid connection between the wiper blade and the wiper arm at the same time as the connection or the release of the wiper blade to or from the wiper arm. Here, the relative movement between the wiper blade and the wiper arm takes place substantially parallel to the wiper blade longitudinal axis.

Moreover, it is rendered obvious by Fig. 2 of DE 103 20 930 A1 to configure and/or arrange the connection between the wiper blade and the wiper arm in such a way that the relative movement between the wiper blade and the wiper arm takes place substantially perpendicularly with respect to the wiper blade longitudinal axis. In the wiper blade known from the document mentioned last, however, no fluid connection and no nozzle opening are provided on the wiper blade.

WO2010/006776 discloses also a wiper blade for the cleaning of vehicle windows.

### Disclosure of the Invention

Starting from the prior art which is shown, the invention is based on the object of developing a wiper blade for the cleaning of vehicle windows in such a way that it can be connected to the wiper arm in a particularly simple manner for an operator. In a wiper blade for the cleaning of vehicle windows having the features of Claim 1, this object is achieved according to the invention substantially by virtue of the fact that the wiper blade adapter is releasably connected with the wiper arm adapter in a direction at least substantially perpendicularly to the wiper blade longitudinal axis.

The wiper blade according to the invention can be produced and mounted relatively simply, and is provided with the wiper blade adapter that consists of an adapter element on the wiper blade side and of an adapter element on the wiper arm side, which are arranged swivellably with respect to one another, and the two adapter elements are connected with each other via a hose connection, and the hose connection is connected on the adapter element on the wiper arm side with a fluid connecting piece, which has a connecting piece attachment running perpendicularly to the wiper blade longitudinal axis on the side facing away from the hose connection.

Furthermore, in order to minimize the length of the vehicle-side supply line which is configured, in particular, as a hose line, it is provided that the connecting piece attachment is arranged on the side of the adapter element on the wiper arm side on the side facing the wiper arm.

In order to prevent damage to the fluid connection between the wiper blade and the wiper arm, for example when driving through a car wash, it is proposed, moreover, that the connecting piece attachment, with wiper blade mounted on the wiper arm, is overlapped by the wiper arm or by a wiper arm covering.

In order to ensure the fluid connection between the wiper blade and the wiper arm and at the same time to avoid it being possibly optionally for cleaning or washing fluid to escape out of the connecting point between the wiper blade and the wiper arm, it is provided, moreover, that the further connecting piece attachment is connected with a fluid connecting piece attachment on the wiper arm side via an additional detent connection.

The invention also comprises an assembly with a wiper arm and a wiper blade according to the invention. Here, it is provided according to the invention that the supply system on the vehicle side for the supplying of the cleaning or washing fluid has a fluid connection on the wiper arm side, which on the connecting or releasing with respect to the wiper blade is arranged in alignment with the fluid connection on the wiper blade side, in particular constructed as connecting piece attachment.

A particularly reliable fluid connection of the wiper arm with the wiper blade with a simultaneously simple ability to produce the wiper arm is made possible if the fluid connection on the wiper arm side is constructed as a fluid connecting piece attachment, consisting of plastic and securely connected with the wiper arm, which is able to be connected on the vehicle side with a supply line, constructed as a hose, and on the wiper blade side with a fluid connecting piece of the wiper blade.

Further advantages, features and details of the invention result from the following description of preferred exemplary embodiments and using the drawings, in which:
Fig. 1 shows a wiper blade according to the invention which is fastened to a wiper arm, in a perspective view,
Fig. 2 shows parts of the wiper arm and of the wiper blade according to Fig. 1 in a state in which they are connected with one another, in an enlarged perspective view,
Fig. 3 shows constituent parts of the wiper blade according to the invention and of the wiper arm in an exploded illustration, and
Fig. 4 shows the connecting region between the wiper blade according to the invention and the wiper arm, in a sectional illustration.

Identical components or components having an identical function are provided with the same designations in the figures.

The figures show a wiper blade 10 according to the invention for the cleaning of vehicle windows, in particular of front windows of a road vehicle. The wiper blade 10 is fastened exchangeably to one end 2 of a wiper arm 1. The wiper arm 1 consists in a known manner of a bearing element 3 which can be fastened to a wiper shaft of a window wiper drive and of a wiper rod 5 which is connected in an articulated manner via a wiper arm joint 4 to the bearing element 3 and to the wiper arm end of which, which faces away from the bearing element 3, the wiper blade 10 is fastened by means of a wiper blade adapter 11. To this end, the wiper blade adapter 11 interacts with a wiper arm adapter 8 which is arranged at the end 2 of the wiper arm 1.

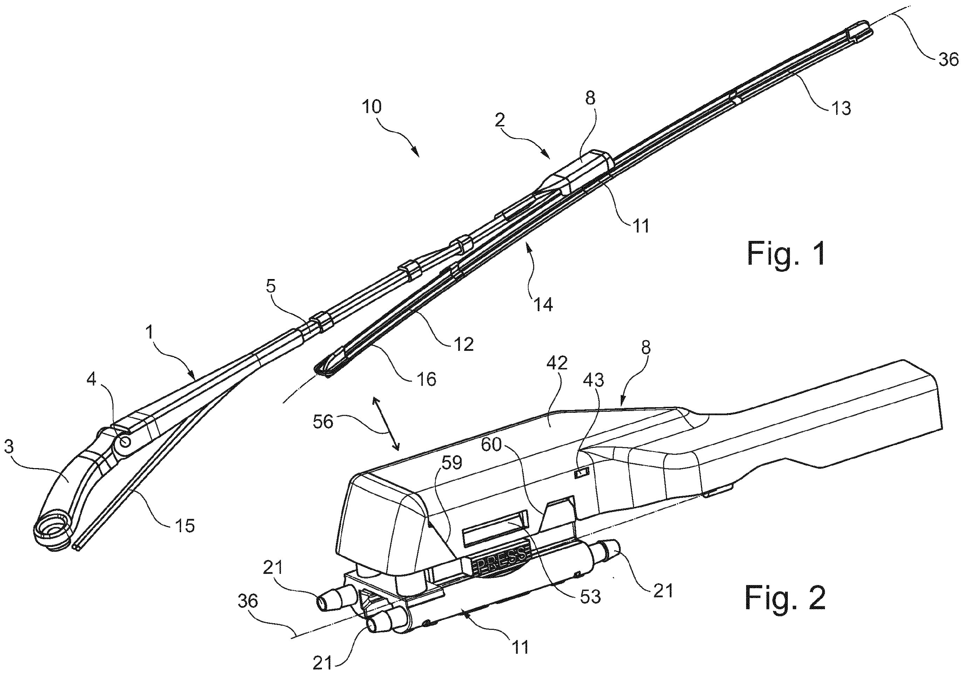

The wiper blade 10 has two wiper blade sections 12, 13, which are of approximately equally long configuration in the exemplary embodiment, as parts of a wiper blade body 14, between which the wiper blade adapter 11 is arranged. In the longitudinal direction of the two wiper blade sections 12, 13, spray channels (not shown) are formed which are arranged parallel to one another and communicate with nozzle or spray openings which likewise cannot be seen in Fig. 1 and via which a cleaning or washing fluid can be applied to the vehicle window.

With regard to the arrangement and configuration of the spray channels and nozzle or spray openings, reference is made by way of example to DE 10 2008 021 457 A1 from the applicant.

The supply of the nozzle or spray openings with the cleaning or washing fluid (called only washing fluid in the following text) takes place on the vehicle side via a supply line 15 which is routed in the wiper arm 1. On their underside, the two wiper blade sections 12, 13 have a receiving groove for a wiper rubber 16 which forms a wiper lip and is in bearing contact with the vehicle window.

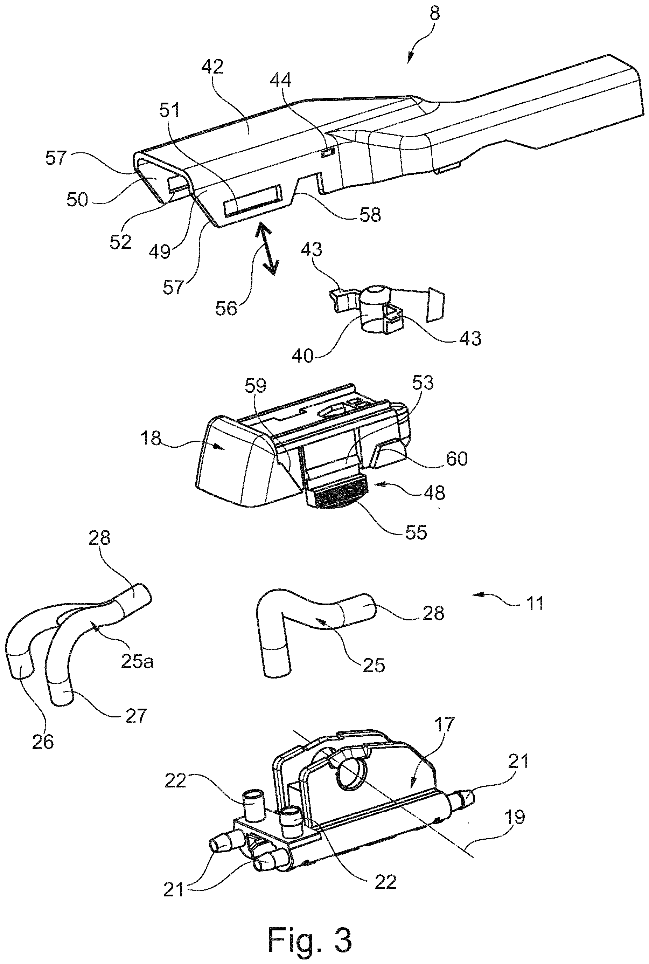

As can be seen, in particular, from Fig. 3, the wiper blade adapter 11 has an adapter element 17 on the wiper blade side and an adapter element 18 on the wiper arm side. In the mounted state, the two adapter elements 17, 18 are arranged such that they can be pivoted with respect to one another in an axis 19.

Furthermore, the adapter element 17 on the wiper blade side has outlet connecting pieces 21 for the washing fluid, which outlet connecting pieces 21 are arranged in alignment with the abovementioned spray channels and onto which the wiper blade sections 12, 13 of the wiper blade body 14 are plugged. Furthermore, two inlet connecting pieces 22 are also seen in Fig. 3, which inlet connecting pieces 22 are connected hydraulically with the outlet connecting pieces 21 on the respective longitudinal side of the wiper blade sections 12, 13. The inlet connecting pieces 22 are supplied with the washing fluid by means of a hose element 25. There can be provision here that the hose element 25 is connected with one of the two inlet connecting pieces 22, whereas the other of the two inlet connecting pieces 22 remains free. That means that, in this case, the wiper blade 10 is supplied with washing fluid merely on that side of the wiper blade 10, on which the inlet connecting piece 22 which is arranged with the hose element 25 is situated.

However, it can also be provided that, instead of the hose element 25, a Y-shaped hose element 25a is used which has in each case one outlet 26, 27 on the side of the two inlet connecting pieces 22 and has a single inlet 28 on the side of the inlet of the hose element 25a. In this case, the inlet connecting pieces 22 can be supplied with washing fluid on both sides of the wiper blade 10.

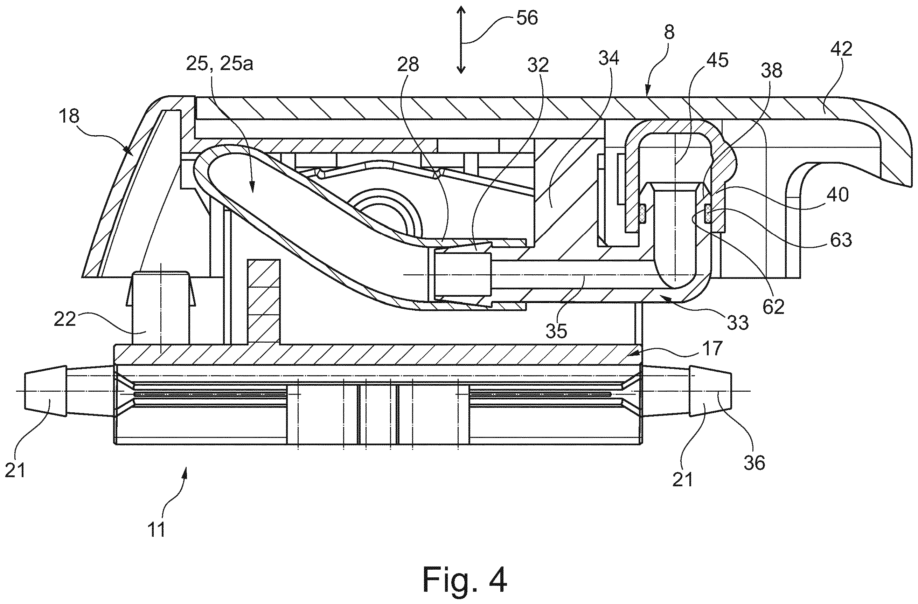

As can be best seen using Fig. 4, the inlet 28 of the hose element 25, 25a can be pushed over a first connecting piece attachment 32 of a fluid connecting piece 33. The fluid connecting piece 33 is a constituent part of the adapter element 18 on the wiper arm side and penetrates a transverse wall 34 of the adapter element 18 on the wiper arm side. As can be seen, in particular, using Fig. 4, the longitudinal axis 35 of the first connecting piece attachment 32 is aligned in a middle operating position of the wiper blade 10 at least approximately with the wiper blade longitudinal axis 36 which is aligned with the outlet connecting pieces 21.

On that side of the first connecting piece attachment 32 which faces away from the hose element 25, 25a, the fluid connecting piece 33 has a second connecting piece attachment 38 which is arranged perpendicularly with respect to the longitudinal axis 35 of the first connecting piece attachment 32. The second connecting piece attachment 38 interacts with a fluid connecting piece attachment 40 on the wiper arm side, which in turn is connected with the supply line 15 on the side which faces away from the second connecting piece attachment 38. At least the fluid connecting piece attachment 40 is configured as an injection-moulded plastic part and is arranged within a wiper arm covering 42 or is connected with the latter. The wiper arm covering 42 can either be connected with the end 2 of the wiper arm 1 or can be formed integrally on the wiper arm 1. In the exemplary embodiment which is shown, it is provided that the fluid connecting piece attachment 40 is connected with the wiper arm covering 42 via two latching lugs 43 which are arranged on the fluid connecting piece attachment 40 on opposite sides, by the two latching lugs 43 engaging into corresponding recesses 44 of the wiper arm covering 42 and/or latching with them.

As can be seen particularly clearly using Fig. 4, the longitudinal axis 45 of the fluid connecting piece attachment 40, with wiper blade 10 mounted on the wiper arm 1, is oriented so as to be aligned with the second connecting piece attachment 38 of the fluid connecting piece 33.

The connection of the wiper blade adapter 11 with the wiper arm adapter 8 takes place via a latching connection 48. On two side walls 49, 50 of the wiper arm adapter 8 which are arranged parallel to one another, the latching connection 48 has in each case one cut-out 51, 52 which is rectangular in the exemplary embodiment and which interacts with a latching lug 53 on a latching hook 55 which is arranged on the adapter element 18 on the wiper arm side. It is essential that the arrangement or orientation of the cut-outs 51, 52 and of the latching lugs 53 is such that they extend substantially parallel to the wiper blade longitudinal axis 36, the direction for mounting or removing the wiper blade 10 on the or from the wiper arm 1 being one according to the double arrow 56 which extends at least substantially perpendicularly with respect to the wiper blade longitudinal axis 36.

In order to centre the wiper blade adapter 11 on the wiper arm adapter 8, it can be provided that the wiper arm adapter 8 has slopes 57 and cut-outs 58 which are arranged by way of example on the two side walls 49, 50 of the wiper arm adapter 8. These slopes 57 and cut-outs 58 interact with corresponding mating slopes 59 and joining contours 60, respectively, which are arranged or formed on the adapter element 18 on the wiper arm side.

The fastening of the wiper blade 10 to the wiper arm 1 takes place by the wiper blade 10 with its wiper blade adapter 11 being brought in the direction of the double arrow 56 into operative connection with the wiper arm adapter 8. Here, the slopes 57 and cut-outs 58 serve, in conjunction with the mating slopes 59 and the joining contour 60, for centring the wiper blade adapter 11 on the wiper arm adapter 8. It is also essential that, during joining of the wiper arm adapter 8 with the wiper blade adapter 11, the second connecting piece attachment 38 of the fluid connecting piece 33 comes into operative connection with the fluid connecting piece attachment 40 within the wiper arm covering 42 or the wiper arm 1 and, in addition to the mechanical connection between the wiper blade 10 and the wiper arm 1, at the same time the hydraulic connection between the two stated parts is produced.

In order to ensure a hydraulically sealed connection between the second connecting piece attachment 38 and the fluid connecting piece attachment 40, it can be provided that the second connecting piece attachment 38 has, by way of example, a radially circumferential annular groove 62, in which an O-ring 63 is arranged which serves for sealing and bears sealingly against the inner circumference of the fluid connecting piece attachment 40.

In order to release the wiper blade 10 from the wiper arm 1, the two latching hooks 55 are pressed against one another, with the result that the latching lugs 53 pass out of engagement with the cut-outs 51, 52 on the wiper arm adapter 8. A release of the wiper blade 10 in the direction of the double arrow 56 from the wiper arm 1 is therefore possible.

The wiper blade 10 according to the invention, described to this extent, and the wiper arm 1 can be converted or modified in a wide variety of ways, without deviating from the concept of the invention. Thus, it is conceivable, for example, to configure the fluid connecting piece attachment 42 in such a way that it provides a dedicated fluid supply for each of the inlet connecting pieces 22. Moreover, it can also be provided that the fluid connecting piece attachment 40 can be formed integrally on the wiper arm covering 42.

## Claims

1. Wiper blade (10) for the cleaning of vehicle windows, with :
- at least one wiper blade body (14) extending in a wiper blade longitudinal axis (36), with at least one wiper rubber (16), having at least one wiper lip, on the wiper blade body (14),
- at least one wiper blade adapter (11) for a mechanical connection of the wiper blade (10) with a wiper arm adapter (8) arranged on a wiper arm (1), wherein the wiper blade adapter (11) has an adapter element (17) on the wiper blade side and an adapter element (18) on the wiper arm side arranged such that they can be pivoted with respect to one another in an axis (19), and
- with at least one nozzle opening provided on the wiper blade (10), which is able to be connected via a fluid connection (38) on the wiper blade side with a supply system on the vehicle side for supplying a cleaning or washing fluid,
- wherein for connecting or releasing the mechanical connection between the wiper blade adapter (11) and the wiper arm adapter (8) at the same time also the fluid connection is produced or respectively released,
- wherein the wiper blade adapter (11) is able to be releasably connected with the wiper arm adapter (8) in a direction (56) at least substantially perpendicularly to the wiper blade longitudinal axis (36),
- the wiper blade adapter (11) consisting of an adapter element (17) on the wiper blade side and of an adapter element (18) on the wiper arm side, which are arranged swivellably with respect to each other, that the two adapter elements (17, 18) are connected with each other via a hose connection (25; 25a), and that the hose connection (25; 25a) is connected on the adapter element (18) on the wiper arm side with a fluid connecting piece (33), which has a connecting piece attachment (38) running perpendicularly to the wiper blade longitudinal axis (36) on the side facing away from the hose connection (25; 25a).

2. Wiper blade according to Claim 1,
**characterized in that**
on the side facing the hose connection (25; 25a), the fluid connecting piece (33) has a further connecting piece attachment (32), which is arranged running substantially parallel to the wiper blade longitudinal axis (36).

3. Wiper blade according to Claim 1 or 2,
**characterized in that**
the connecting piece attachment (38) is arranged on the side of the adapter element (18) on the wiper arm side on the side facing the wiper arm (1).

4. Wiper blade according to one of the preceding Claims,
**characterized in that**
the connecting piece attachments (32, 38), with wiper blade (10) mounted on the wiper arm (1), are able to be overlapped by the wiper arm (8) or by a wiper arm covering (42).

5. Wiper blade according to one of the preceding Claims,
**characterized in that**
the further connecting piece attachment (38) is able to be connected with a fluid connecting piece attachment (40) on the wiper arm side via an additional detent connection (62, 63).

6. Wiper blade according to one of the preceding Claims,
**characterized in that**
the fluid connecting piece (33) penetrates a transverse wall (34) of the adapter element (18) on the wiper arm side.

7. Assembly comprising a wiper arm (1) and a wiper blade (10) according to one of Claims 1 to 6,
**characterized in that**
the supply system on the vehicle side for the supplying of the cleaning or washing fluid has a fluid connection (40) on the wiper arm side, which on the connecting or releasing with respect to the wiper blade (10) is arranged in alignment with the fluid connection on the wiper blade side, constructed as connecting piece attachment (38), wherein the fluid connection on the wiper arm side is constructed as a fluid connecting piece attachment (40), consisting of plastic and securely connected with the wiper arm (1), which is able to be connected on the vehicle side with a supply line (15), constructed as a hose, and on the wiper blade side with a fluid connecting piece (33) of the wiper blade (10), wherein the fluid connecting piece attachment (40) on the wiper arm side and the connecting piece attachment (38) on the wiper blade side are arranged at least approximately perpendicularly with the wiper blade longitudinal axis (36).

8. Assembly according to Claim 7,
**characterized in that**
the fluid connection (40) on the wiper arm side overlaps the connecting piece attachment (38) radially and is connected therewith in a hydraulically sealed manner via an O-ring (63).

## Patentansprüche

1. Wischblatt (10) zum Reinigen von Fahrzeugscheiben, mit:
wenigstens einem sich in einer Wischblattlängsachse (36) erstreckenden Wischblattkörper (14) mit wenigstens einem zumindest eine Wischlippe aufweisenden Wischgummi (16) am Wischblattkörper (14),
- wenigstens einem Wischblattadapter (11) für eine mechanische Verbindung des Wischblattes (10) mit einem an einem Wischarm (1) angeordneten Wischarmadapter (8), wobei der Wischblattadapter (11) auf der Wischblattseite ein Adapterelement (17) und auf der Wischarmseite ein Adapterelement (18) aufweist, die derart angeordnet sind, dass sie in Bezug zueinander um eine Achse (19) verschwenkt werden können, und
- wenigstens einer am Wischblatt (10) vorgesehenen Düsenöffnung, die über einen wischblattseitigen Fluidanschluss (38) mit einem fahrzeugseitigen Versorgungssystem zum Zuführen einer Reinigungs- oder Waschflüssigkeit verbindbar ist,
- wobei beim Verbinden oder Lösen der mechanischen Verbindung zwischen dem Wischblattadapter (11) und dem Wischarmadapter (8) gleichzeitig auch die Fluidverbindung hergestellt bzw. gelöst wird,
- wobei der Wischblattadapter (11) in einer Richtung (56) zumindest im Wesentlichen senkrecht zur Wischblattlängsachse (36) mit dem Wischarmadapter (8) lösbar verbunden ist,
- wobei der Wischblattadapter (11) aus einem wischblattseitigen Adapterelement (17) und einem wischarmseitigen Adapterelement (18) besteht, die schwenkbar zueinander angeordnet sind, wobei die beiden Adapterelemente (17, 18) über eine Schlauchverbindung (25; 25a) miteinander verbunden sind, und wobei die Schlauchverbindung (25; 25a) am wischarmseitigen Adapterelement (18) mit einem Fluidstutzen (33) verbunden ist, der auf der der Schlauchverbindung (25; 25a) abgewandten Seite einen senkrecht zur Wischblattlängsachse (36) verlaufenden Stutzenanschluss (38) aufweist.

2. Wischblatt nach Anspruch 1,
**dadurch gekennzeichnet, dass**
der Fluidstutzen (33) auf der der Schlauchverbindung (25; 25a) zugewandten Seite einen weiteren Stutzenanschluss (32) aufweist, der im Wesentlichen parallel zur Wischblattlängsachse (36) verlaufend angeordnet ist.

3. Wischblatt nach Anspruch 1 oder 2,
**dadurch gekennzeichnet, dass**
der Stutzenanschluss (38) auf der dem Wischarm (1) zugewandten Seite des wischarmseitigen Adapterelements (18) angeordnet ist.

4. Wischblatt nach einem der vorstehenden Ansprüche,
**dadurch gekennzeichnet, dass**
die Stutzenanschlüsse (32, 38) bei am Wischarm (1) montiertem Wischblatt (10) vom Wischarm (1) oder einer Wischarmabdeckung (42) überdeckbar sind.

5. Wischblatt nach einem der vorstehenden Ansprüche,
**dadurch gekennzeichnet, dass**
der weitere Stutzenanschluss (38) mit einem wischarmseitigen Fluidstutzenanschluss (40) über eine zusätzliche Rastverbindung (62, 63) verbunden ist.

6. Wischblatt nach einem der vorstehenden Ansprüche,
**dadurch gekennzeichnet, dass**
der Fluidstutzen (33) eine Querwand (34) des wischarmseitigen Adapterelements (18) durchdringt.

7. Anordnung, einen Wischarm (1) und ein Wischblatt (10) nach einem der Ansprüche 1 bis 6 umfassend,
**dadurch gekennzeichnet, dass**
dass das fahrzeugseitige Versorgungssystem zum Zuführen der Reinigungs- oder Waschflüssigkeit einen wischarmseitigen Fluidanschluss (40) aufweist, der beim Verbinden mit oder Lösen von dem Wischblatt (10) in Ausrichtung mit dem wischblattseitigen, insbesondere als Stutzenanschluss (38) ausgebildeten Fluidanschluss angeordnet ist, wobei der wischarmseitige Fluidanschluss als ein aus Kunststoff bestehender und mit dem Wischarm (1) fest verbundener Fluidstutzenanschluss (40) ausgebildet ist, der fahrzeugseitig mit einer als Schlauch ausgebildeten Versorgungsleitung (15) und wischblattseitig mit einem Fluidstutzen (33) des Wischblatts (10) verbindbar ist, wobei der wischarmseitige Fluidanschluss (40) und der wischblattseitige Stutzenanschluss (38) mindestens in etwa senkrecht zur Wischblattlängsachse (36) angeordnet sind.

8. Anordnung nach Anspruch 7,
**dadurch gekennzeichnet, dass**
der wischarmseitige Fluidanschluss (40) den Stutzenanschluss (38) radial überdeckt und mit diesem über einen O-Ring (63) hydraulisch abgedichtet verbunden ist.

## Revendications

1. Balai (10) d'essuie-glace destiné à nettoyer des vitres de véhicule, comportant :
- au moins un corps (14) de balai d'essuie-glace s'étendant suivant un axe longitudinal (36) de balai d'essuie-glace, avec au moins un caoutchouc (16) d'essuie-glace, présentant au moins une lèvre d'essuie-glace, sur le corps (14) de balai d'essuie-glace,
- au moins un adaptateur (11) de balai d'essuie-glace destiné à réaliser une liaison mécanique du balai (10) d'essuie-glace avec un adaptateur (8) de bras d'essuie-glace agencé sur un bras (1) d'essuie-glace, l'adaptateur (11) de balai d'essuie-glace présentant un élément (17) d'adaptateur du côté balai d'essuie-glace et un élément (18) d'adaptateur du côté bras d'essuie-glace agencés de manière à pouvoir pivoter l'un par rapport à l'autre suivant un axe (19), et
- au moins une ouverture de gicleur ménagée sur le balai (10) d'essuie-glace, susceptible d'être reliée, au moyen d'une liaison fluidique (38) du côté balai d'essuie-glace, à un système d'alimentation du côté véhicule destiné à assurer une alimentation en liquide de nettoyage ou de lavage,
- pour la liaison ou la libération de la liaison mécanique entre l'adaptateur (11) de balai d'essuie-glace et l'adaptateur (8) de bras d'essuie-glace, la liaison fluidique étant également simultanément réalisée ou, respectivement, libérée,
- l'adaptateur (11) de balai d'essuie-glace étant susceptible d'être relié amovible à l'adaptateur (8) de bras d'essuie-glace suivant une direction (56) au moins sensiblement perpendiculaire à l'axe longitudinal (36) du balai d'essuie-glace,
- l'adaptateur (11) de balai d'essuie-glace se composant d'un élément (17) d'adaptateur du côté balai d'essuie-glace et d'un élément (18) d'adaptateur du côté bras d'essuie-glace, lesquels sont agencés rotulants l'un par rapport à l'autre, les deux éléments (17, 18) d'adaptateur étant reliés entre eux au moyen d'une liaison par flexible (25 ; 25a), et la liaison par flexible (25 ; 25a) étant reliée, sur l'élément (18) d'adaptateur du côté bras d'essuie-glace, à une pièce de liaison fluidique (33), laquelle présente une fixation (38) de pièce de liaison s'étendant perpendiculairement à l'axe longitudinal (36) du balai d'essuie-glace du côté tourné à l'opposé de la liaison par flexible (25 ; 25a).

2. Balai d'essuie-glace selon la revendication 1,
**caractérisé en ce que**
du côté tourné vers la liaison par flexible (25 ; 25a), la pièce de liaison fluidique (33) présente une fixation supplémentaire (32) de pièce de liaison, laquelle est agencée en s'étendant sensiblement parallèlement à l'axe longitudinal (36) du balai d'essuie-glace.

3. Balai d'essuie-glace selon la revendication 1 ou 2,
**caractérisé en ce que**
la fixation (38) de pièce de liaison est agencée du côté de l'élément (18) d'adaptateur du côté bras d'essuie-glace du côté tourné vers le bras (1) d'essuie-glace.

4. Balai d'essuie-glace selon l'une des revendications précédentes,
**caractérisé en ce que**
les fixations (32, 38) de pièce de liaison, alors que le balai (10) d'essuie-glace est monté sur le bras (1) d'essuie-glace, sont susceptibles d'être recouvertes par le bras (1) d'essuie-glace ou par un cache (42) de bras d'essuie-glace.

5. Balai d'essuie-glace selon l'une des revendications précédentes,
**caractérisé en ce que**
la fixation supplémentaire (38) de pièce de liaison est susceptible d'être reliée à une fixation (40) de pièce de liaison fluidique du côté bras d'essuie-glace au moyen d'une liaison à cliquet additionnelle (62, 63).

6. Balai d'essuie-glace selon l'une des revendications précédentes,
**caractérisé en ce que**
la pièce de liaison fluidique (33) pénètre dans une paroi transversale (34) de l'élément (18) d'adaptateur du côté bras d'essuie-glace.

7. Ensemble comprenant un bras (1) d'essuie-glace et un balai (10) d'essuie-glace selon l'une des revendications 1 à 6,
**caractérisé en ce que**
le système d'alimentation du côté véhicule destiné à assurer l'alimentation en fluide de nettoyage ou de lavage présente une liaison fluidique (40) du côté bras d'essuie-glace, laquelle, lors de la liaison ou de la libération par rapport au balai (10) d'essuie-glace, est agencée en alignement avec la liaison fluidique du côté balai d'essuie-glace, prenant la forme d'une fixation (38) de pièce de liaison, la liaison fluidique du côté bras d'essuie-glace prenant la forme d'une fixation (40) de pièce de liaison fluidique, composée de plastique et solidarisée au bras (1) d'essuie-glace, laquelle est susceptible d'être reliée, du côté véhicule, à un conduit d'alimentation (15), prenant la forme d'un flexible, et, du côté balai d'essuie-glace, à une pièce de liaison fluidique (33) du balai (10) d'essuie-glace, la fixation (40) de pièce de liaison fluidique du côté bras d'essuie-glace et la fixation (38) de pièce de liaison du côté balai d'essuie-glace étant agencées au moins à peu près perpendiculairement à l'axe longitudinal (36) du balai d'essuie-glace.

8. Ensemble selon la revendication 7,
**caractérisé en ce que**
la liaison fluidique (40) du côté bras d'essuie-glace recouvre radialement la fixation (38) de pièce de liaison et y est reliée d'une manière hydrauliquement étanche au moyen d'un joint torique (63).
